# EUROPEAN PATENT SPECIFICATION

(11) **EP 2 416 407 B1**
(45) Date of publication and mention of the grant of the patent: **09.10.2013**
(21) Application number: 11006354.2
(22) Date of filing: 02.08.2011
(51) Int. Cl.: H01M 2/30, H01M 2/34, H01M 2/10, H01R 13/453, B60L 11/18

(54) **Battery pack with a connector to supply power to electrical apparatus connecting terminals**
Batteriepack mit einem Stecker zum Zuführen von Energie zu elektrischen Vorrichtungsanschlusspolen
Bloc-batterie avec connecteur pour alimenter les bornes connectant un appareil électrique

(30) Priority: 05.08.2010 JP 2010176726
(43) Date of publication of application: 08.02.2012
(73) Proprietor: Suzuki Motor Corporation, Shizuoka 432-8611 (JP)
(72) Inventor: Fukukawa, Kouichi, Moriguchi-shi, Osaka 570-8677 (JP); Yoneyama, Shingo, Moriguchi-shi, Osaka 570-8677 (JP); Matsuoka, Norihiro, Hamamatu-Shi, Shizuoka-Ken 432-8611 (JP); Kobayashi, Manabu, Hamamatu-shi, Shizuoka-Ken 432-8611 (JP)
(74) Representative: Hertz, Oliver

(56) References cited:
- EP-A1- 0 480 706
- EP-A1- 2 169 776
- JP-A- 10 223 191

## Description

### BACKGROUND OF THE INVENTION

### 1. Field of the Invention

The present invention relates to a battery pack that loads in a removable manner in an electrical apparatus to supply high-voltage power to the electrical apparatus, which is primarily an electric vehicle such as an electric motor-bike (e.g. electric motor scooter or electric motorcycle) or a bicycle with electrical-assist.

### 2. Description of the Related Art

A battery pack, which supplies power to an electric motor that drives an electric vehicle such as an electric motor-bike, houses high capacity batteries, or numerous batteries to produce high output voltage and current. This serves to increase output power, or more specifically to increase the battery discharging power supplied to the electric vehicle. The battery pack has a case provided with a connector, and has a structure that allows it to be loaded in a removable manner in an electric vehicle. When the battery pack is loaded in an electric vehicle, the connector makes electrical connection with connecting terminals in the electric vehicle enabling power to be supplied from the battery pack to the electric vehicle.

Since this battery pack connects with the electric vehicle through the connector, it can safely and reliably make electrical connection and supply power to the electric vehicle. However, since the battery pack has high output voltage, electric shock or short circuiting can occur if foreign material is introduced and contacts the terminals inside. Consequently, this type of battery pack can be used safely by covering the connector when it is not in use, and removing the cover for connection when the battery pack is loaded in the electric vehicle.

In electrical apparatus having a connector used as power supply terminals, a structure has previously been made practical that closes-off the exposed connector opening with a cover that is free to open and close. (Refer to Japanese Laid-Open Patent Publication 2000-331742.)

In the electrical apparatus cited in JP 2000-331742, a connector that supplies power from an external source is exposed from the case, and a cover that can open and close is provided over the connector opening. When this electrical apparatus is not connected via a power cord having a mating plug, the connector opening is closed-off by the cover to prevent moisture and foreign material ingress. When the power cord plug is connected, the cover is opened to expose the connector and allow plug-connection.

However, this type of structure having a cover that opens and closes over the connector is not necessarily desirable for a high output-voltage battery pack. This is because this type of cover requires hand-operation for opening and closing. For example, if the cover is opened by direct operation with a wet hand, the danger of electric shock and short circuit actually increases. When a high output-voltage battery pack is not in use, it is important to cover the connector opening and avoid exposing the output terminals. However, it is clearly undesirable to require the operator to open or close the cover by putting a hand in the vicinity of the connector opening.

Further, without restriction to an electrical apparatus, an opening and closing cover configuration has also been developed and put into practice to cover terminal windows at power supply output terminals (for example, power outlets). In particular, an opening and closing structure has been made practical that, for example, opens a cover via plug insertion without direct hand-intervention. However, since this structure opens and closes a cover over the entire terminal window, it has the drawback that the mechanism to open and close the entire cover becomes complex. In particular, a connector provided with communication terminals in addition to positive and negative power-output terminals can become large, and a mechanism to smoothly and reliably open and close the entire connector becomes even more complex.

EP 2 169 776 A1 discloses an electrical connector for a battery pack having one single terminal window for accessing to a contact unit having a plurality of contacts. The terminal window can be closed or opened under the effect of a set of pushing rods. Further battery packs are disclosed in EP 0 480 706 A1 and JP 10 223191 A, wherein connecting terminals are used for opening a closure of a terminal window of a battery pack.

The present invention was developed with the object of correcting the drawbacks described above. Thus, it is a primary object of the present invention to provide a battery pack that covers connector terminal windows to avoid ingress of foreign material and reliably prevent electrical shock and short circuit when the battery pack is not loaded in an electrical apparatus loading cavity, and opens connector terminal windows to allow reliable connection with electrical apparatus connecting terminals when the battery pack is loaded in the electrical apparatus loading cavity. Another important object of the present invention is to provide a battery pack that can open connector terminal windows when the battery pack is loaded via a shutter-opening rod provided in the electrical apparatus loading cavity to avoid direct hand-opening and allow safe, reliable connection of the connector to the electrical apparatus connecting terminals. Still another important object of the present invention is to provide a battery pack that can rapidly open and close the connector terminal windows and reliably prevent detrimental effects such as electric shock and short circuit while maintaining a simple structure.

### SUMMARY OF THE INVENTION

The battery pack of the present invention loads in an electrical apparatus 50, 150 loading cavity 51, 151 having a shutter-opening rod 56, 156, a connector 3, 103 connects with connecting terminals 52, 152 mounted in the electrical apparatus 50, 150, and the battery pack supplies power to the electrical apparatus 50, 150. The connector 3, 103 extends from a battery pack case 2, 102 housing a plurality of batteries 11 that can be charged. The connector 3, 103 connects with electrical apparatus 50, 150 connecting terminals 52, 152 to supply power from the batteries 11 housed in the case 2, 102. The connector 3, 103 has a plurality of terminal windows 33, 33', 133, 133' opened in a line across a connecting plane 3X, 103X on the insertion-side of the battery pack to make connection with electrical apparatus 50, 150 connecting terminals 52, 152 when the battery pack is inserted in the electrical apparatus 50, 150 loading cavity 51, 151, and those connector terminal windows 33, 33', 133, 133' are exposed through the battery pack case 2, 102. In addition, the battery pack is provided with a shutter mechanism 4 that is opened by the shutter-opening rod 56, 156 and opens and closes one part of the plurality of terminal windows 33, 33', 133, 133' in the connector 3, 103. When the battery pack is not loaded in the loading cavity 51, 151 and the shutter-opening rod 56, 156 is not inserted, the shutter mechanism 4 closes-off connector terminal windows 33', 133'. When the battery pack is loaded in the loading cavity 51, 151 and the shutter-opening rod 56, 156 is inserted, the shutter mechanism 4 opens those connector terminal windows 33', 133' to allow connecting terminal 52, 152 insertion.

The battery pack of the present invention has the characteristic that when it is not loaded in an electrical apparatus loading cavity, connector terminal windows are closed-off to avoid ingress of foreign material and reliably prevent electrical shock and short circuit, and when the battery pack is loaded in an electrical apparatus loading cavity, connector terminal windows are opened to allow reliable connection with electrical apparatus connecting terminals. This is because the connector, which has a plurality of terminal windows opened to accept electrical apparatus connecting terminal insertion, is joined to the battery pack case, and the terminal windows are exposed through the case. Further, a shutter mechanism is provided that opens and closes one part of the plurality of terminal windows opened in the connector, and when the shutter-opening rod established in the loading cavity is inserted, the shutter mechanism operates to open the terminal windows. The shutter mechanism closes-off the terminal windows when the shutter-opening rod is not inserted, and opens the terminal windows to allow connecting terminal insertion when the shutter-opening rod is inserted. Therefore, when the battery pack is not loaded in the loading cavity, connector terminal windows are closed-off to prevent electric shock and short circuit, and when the battery pack is loaded in the loading cavity, connector terminal windows are opened to allow reliable connection with the connecting terminals. In particular, this shutter mechanism does not open and close all of the plurality of terminal windows established in the connector, but rather opens and closes one part of the terminal windows. As a result, the shutter mechanism can reliably open and close terminal windows in the connector with a simple structure consuming minimal space. Further, since the shutter-opening rod established in the loading cavity inserts in the shutter mechanism to open the terminal windows when the battery pack is loaded in the loading cavity, the terminal windows can be safely and reliably opened to connect the connector with the connecting terminals with no direct hand-opening of the connector terminal windows as required by prior art.

In the battery pack of the present invention, the shutter mechanism 4 can be provided with a shutter 41 that opens and closes with reciprocating motion in a direction that closes-off the connector 3, 103 terminal windows 33', 133' and in a direction that opens the connector 3, 103 terminal windows 33', 133', and resilient material 42 that spring-loads the shutter 41 in the closed direction. When the shutter-opening rod 56, 156 is not inserted in the shutter mechanism 4, the shutter 41 is spring-loaded closed by the resilient material 42 to close-off the connector 3, 103 terminal windows 33', 133'. When the shutter-opening rod 56, 156 is inserted in the shutter mechanism 4, the shutter 41 is pushed in the open direction by the shutter-opening rod 56, 156 to open the connector 3, 103 terminal windows 33', 133'. This battery pack can reliably open and close terminal windows established in the connector while maintaining a simple shutter mechanism.

In the battery pack of the present invention, the shutter 41 can be provided with an actuator 41 B that moves the shutter 41 in the open direction when pushed by the shutter-opening rod 56, 156, and the actuator 41 B can be provided with a sliding plane 41 b that slants or curves with respect to the shutter-opening rod 56, 156 insertion direction. Further, when the shutter-opening rod 56, 156 is inserted in the shutter mechanism 4, the shutter-opening rod 56, 156 presses against the sliding plane 41 b to slide the shutter 41 in the open direction. In this battery pack, when the shutter-opening rod is inserted in the shutter mechanism, the shutter can be reliably moved in a direction to open the terminal windows. In particular, the shutter, which is pushed by the shutter-opening rod, can be moved in the open direction using a simple structure.

In the battery pack of the present invention, the connector 3, 103 can have a plurality of terminal windows 33, 33', 133, 133' opened in a line, and the shutter mechanism 4 can open and close the terminal window 33', 133' located at the end the connector 3, 103. This battery pack has the characteristic that since the shutter mechanism opens and closes the terminal window at the end of the plurality of terminal windows, the shutter mechanism can be simple with a small outline to fit in a minimal space.

In the battery pack of the present invention, the connector 3, 103 can be provided with a plurality of contacts 32 that connect with connecting terminals 52, 152 inserted in the terminal windows 33, 33', 133, 133', and the contact 32 in the terminal window 33', 133' opened and closed by the shutter mechanism 4 can be the positive or negative output terminal 32A. Since the shutter mechanism of this battery pack opens and closes the positive or negative output terminal window, the high-voltage positive or negative output terminal can be reliably covered to effectively prevent electric shock and short circuit when the battery pack is not loaded in the electrical apparatus. The above and further objects of the present invention as well as the features thereof will become more apparent from the following detailed description to be made in conjunction with the accompanying drawings.

### BRIEF DESCRIPTION OF THE DRAWINGS

Fig. 1 is an oblique view of a battery pack for an embodiment of the present invention;
Fig. 2 is an oblique view from the backside of the battery pack shown in Fig.1;
Fig. 3 is an oblique view from below of the battery pack shown in Fig. 1;
Fig. 4 is a vertical cross-section of the battery pack shown in Fig. 1;
Fig. 5 is an exploded oblique view of the battery pack shown in Fig. 1;
Fig. 6 is an exploded oblique view of the battery block of the battery pack shown in Fig. 5;
Fig. 7 is an exploded oblique view showing the connecting configuration of the connector and case of the battery pack shown in Fig. 1;
Fig. 8 is an oblique view from the backside showing the connecting configuration of the connector and case of the battery pack shown in Fig. 1;
Fig. 9 is an oblique view from below showing the connecting configuration of the connector and case of the battery pack shown in Fig. 1;
Fig. 10 is a side view showing the battery pack of Fig. 2 loaded in an electric vehicle with one part enlarged in a cross-section inset;
Fig. 11 is a cross-section laterally across the electric vehicle shown in Fig. 10 with one part enlarged in an inset;
Fig. 12 is a vertical cross-section view showing the battery pack being loaded in the loading cavity of the electric vehicle;
Fig. 13 is a cross-section laterally across the loading cavity showing the battery pack being loaded in the loading cavity of the electric vehicle;
Fig. 14 is an enlarged cross-section through the line XIV-XIV in Fig. 4 showing the connecting configuration of the connector and connecting terminals;
Fig. 15 is an enlarged cross-section showing the connector of Fig. 14 being connected with the connecting terminals;
Fig. 16 is an enlarged cross-section through the line XVI-XVI in Fig. 11 showing the connector of Fig. 14 connected with the connecting terminals;
Fig. 17 is an enlarged oblique view showing the connecting configuration of the locking mechanism and locking pin at the bottom of the case;
Fig. 18 is a front view of one example of a locking mechanism showing the locking pin in the unlocked state;
Fig. 19 is a front view of one example of a locking mechanism showing the locking pin in the locked state;
Fig. 20 is an oblique view of a battery pack for another embodiment of the present invention;
Fig. 21 is an enlarged cross-section showing the connecting configuration of the connector and connecting terminals for the battery pack shown in Fig. 20; and
Fig. 22 is an enlarged cross-section showing the connector of Fig. 21 connected with the connecting terminals.

### DETAILED DESCRIPTION OF THE EMBODIMENTS

The following describes embodiments of the present invention based on the figures.

The battery pack of the present invention is primarily loaded on-board an electric vehicle that consumes high-power, and is used as a power source to supply power to the motor that drives the vehicle. The battery pack is used as a power source in an electrical apparatus that is an electric vehicle such as an electric motor-bike (e.g. electric motor scooter or electric motorcycle), a bicycle with electrical-assist, an electric wheel-chair, an electric three-wheeled vehicle, or an electric go-cart. Or, the battery pack is used as a power source in an electrical apparatus such as an electric cultivator, an electric weed cutter, or an electric recreational apparatus. However, applications for the battery pack of the present invention are in no way limited, and it can also be used as a power source in various electrical apparatus that operate with high power such as in an electric power tool or floodlight. The following describes in detail embodiments where the electrical apparatus is an electric motor-bike.

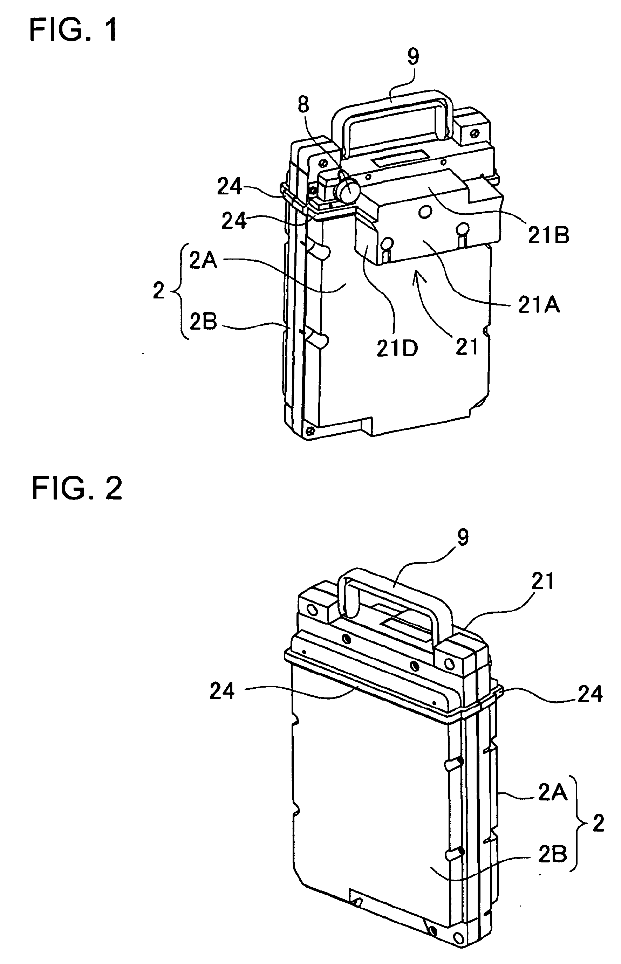

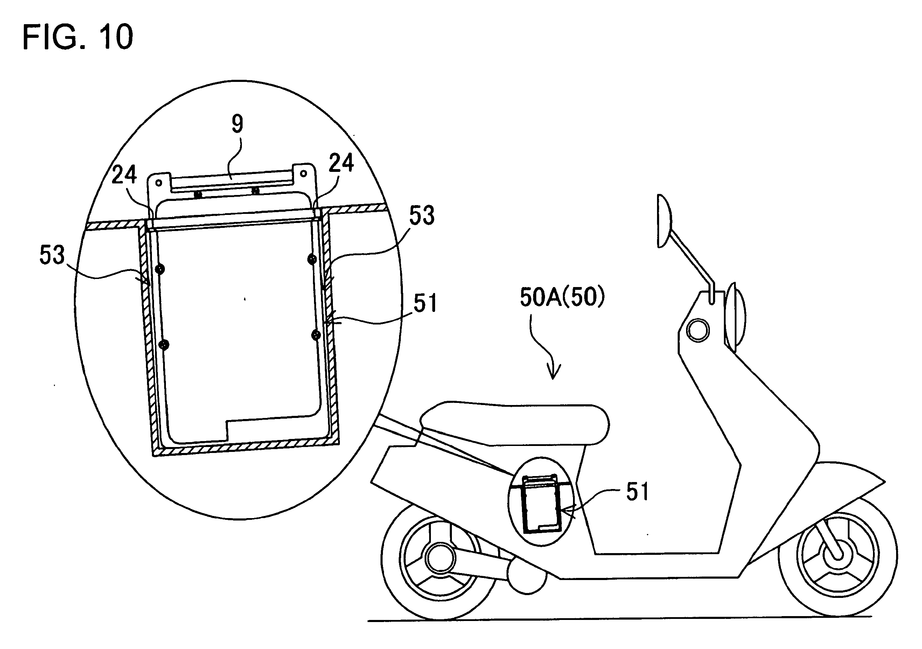

As shown in Figs. 10-16, the battery pack of Figs. 1-9 is loaded in an electrical apparatus 50 loading cavity 51 having a shutter-opening rod 56 to connect a connector 3 with connecting terminals 52 mounted in the electrical apparatus 50 and supply power to the motor of an electric motor-bike 50A, which is the electrical apparatus 50. The electrical apparatus 50 loading cavity 51 has a shape that can hold the battery pack in a fixed position in a removable manner. For example, the loading cavity 51 can have one open end with an inside shape essentially the same as the outside shape of the battery pack. In addition, the loading cavity 51 has a plurality of connecting terminals 52 that connect with the connector 3 of the battery pack loaded in the loading cavity 51, and a shutter-opening rod 56 that inserts in the shutter mechanism 4 to open the terminal window 33' in the connector 3. The connecting terminals 52 and shutter-opening rod 56 are mounted perpendicular to a mounting plane 54 in the loading cavity 51. The connecting terminals 52 are metal blades, and the shutter-opening rod 56 is long narrow circular metal rod with an end tapered to a point. However, the shutter-opening rod can also have a long narrow polygonal-cylindrical shape or a flat-plate shape. The battery pack inserts in the loading cavity 51 to insert the shutter-opening rod 56 in the shutter mechanism 4 and insert the connecting terminals 52 in the connector 3 for electrical connection. Accordingly, the connecting terminals 52 and the shutter-opening rod 56 are mounted in a manner exposed from the inside of the loading cavity 51 and in an orientation protruding in a direction parallel to the battery pack loading direction. The loading cavity 51 has plastic side-walls and is fabricated by molding.

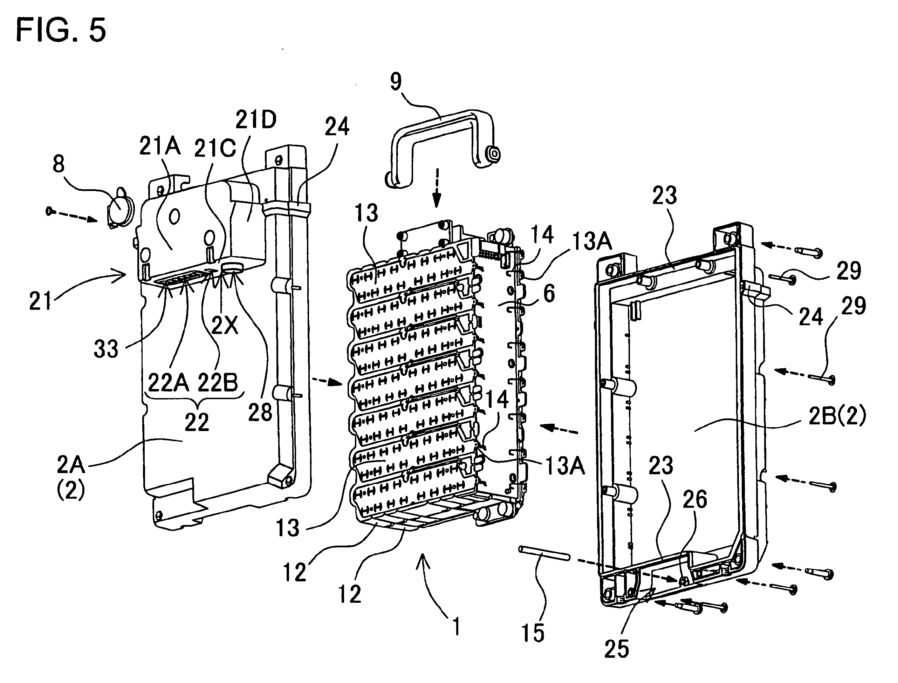

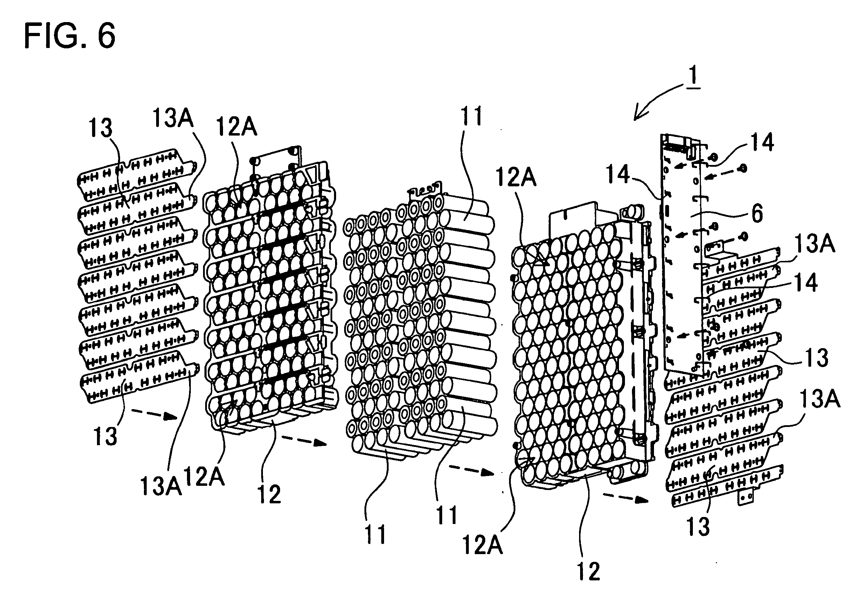

As illustrated in Fig. 6, the battery pack of Fig. 5 has a plurality of batteries 11 connected in series and parallel and arranged as a battery block 1, and that battery block 1 is held in a case 2. The battery block 1 has a plurality of circular cylindrical batteries 11 disposed in fixed positions in a battery holder 12, connected in series to increase output voltage, and connected in parallel to increase charging and discharging current. The batteries 11 are nickel-hydride batteries. However, rectangular batteries can also be used as the battery block batteries, and any rechargeable batteries such as lithium ion batteries or nickelcadmium batteries can be used instead of nickel-hydride batteries. The battery block 1 of Fig. 6 has circular cylindrical batteries 11 arranged in many rows and columns. To hold a plurality of batteries 11 in fixed positions, the battery holder 12 is provided with a plurality of cylinders 12A open at both ends and formed from plastic in single-piece construction. The battery holder 12 cylinders 12A are disposed parallel to each other. Further, in the battery holder 12 of the figures, batteries 11 inserted in many rows and columns of cylinders 12A are arranged with adjacent rows offset (as in a pile of logs) to position the batteries 11 in one row between the batteries 11 in the adjacent row. Electrode terminals established at both ends of the batteries 11 inserted in the battery holder 12 cylinders 12A are exposed from the battery holder 12, and lead-plates 13 are weld-attached to those electrode terminals to connect the batteries 11 in series and parallel and form a single-unit structure.

Further, the battery block 1 of Figs. 5 and 6 has a circuit board 6 screw-attached to the side of the battery holder 12. The circuit board 6 has electronic circuitry mounted to perform operations such as controlling battery 11 charging and discharging, and detecting remaining battery 11 capacity. The lead-plates 13 are provided with connecting sections 13A at one end to connect with the circuit board 6. The connecting sections 13A of the lead-plates 13 are connected to the circuit board 6 by lead-wires 14.

The connector 3 is attached to the battery pack case 2 to connect with electrical apparatus 50 connecting terminals 52 and supply battery 11 power from the battery block 1 to the electrical apparatus 50. The connector 3 connects with the connecting terminals 52 of the electrical apparatus 50 to supply battery 11 power to the electrical apparatus 50. In the battery pack shown in the figures, the connector 3 is housed inside a case extension 21, which is established in a manner protruding from the surface of the case 2. The connector 3 is provided with a connector case 31 made of plastic, which is insulating material. The outline of the connector case 31 is made smaller than the inside of the case extension 21 to allow it to be housed inside the case extension 21. The connector case 31 disposed inside the case extension 21 is joined to the case 2 via an attachment plate 85.

The connector case 31 has a plurality of terminal windows 33, 33' for connecting terminal 52 insertion opened in a line across a connecting plane 3X on the insertion-side of the battery pack to allow connection with electrical apparatus 50 connecting terminals 52 when the battery pack is inserted in the electrical apparatus 50 loading cavity 51. The battery pack shown in the figures inserts vertically into the loading cavity 51 of the electrical apparatus 50, which is an electric motor-bike 50A, to connect the connecting terminals 52 with the connector 3. Therefore, the terminal windows 33, 33' are established on the bottom surface of the connector case 31, which is the connecting plane 3X. The connector case 31 of the figures is provided with an alignment projection 34 extending out from the bottom surface. A plurality of terminal windows 33 is disposed inside the alignment projection 34, and the terminal window 33', which is opened and closed by the shutter mechanism 4 described later, is opened adjacent to the alignment projection 34. The terminal windows 33 provided in the alignment projection 34 and the terminal window 33' established adjacent to the alignment projection 34 are disposed in a single straight-line. The connector case 31 of the figures is configured with one terminal window 33' adjacent to the alignment projection 34 that is opened and closed by the shutter mechanism 4. However, the connector case can also have a plurality of terminal windows opened adjacent to the alignment projection.

The plurality of terminal windows 33, 33' provided in the connector 3 are exposed from an underside surface 2X of the case 2 opposite the electrical apparatus 50 connecting terminals 52. The underside surface 2X of case 2 of the figures is the bottom surface plate 21C of the case extension 21 that houses the connector 3, and windows 22 are opened through the bottom surface plate 21C to expose the connector 3 terminal windows 33, 33' outside the case 2. In the case extension 21 of the figures, the bottom surface plate 21C has a first window 22A that accepts connector case 31 alignment projection 34 insertion, and a second window 22B that exposes the terminal window 33' opened adjacent to the alignment projection 34. The inside shape of the first window 22A is sized to avoid position shift in the connector 3 alignment projection 34. Specifically, the inside shape of the first window 22A is made approximately the same size as the connector case 31 alignment projection 34 to allow proper positioning of the alignment projection 34 in the first window 22A. The connector case 31 alignment projection 34 has a height that makes the alignment projection 34 extend out from the first window 22A. The second window 22B is opened through the bottom surface plate 21C at the location of the terminal window 33' adjacent to the alignment projection 34, and is opened in a manner that allows a connecting terminal 52 to insert into the terminal window 33'.

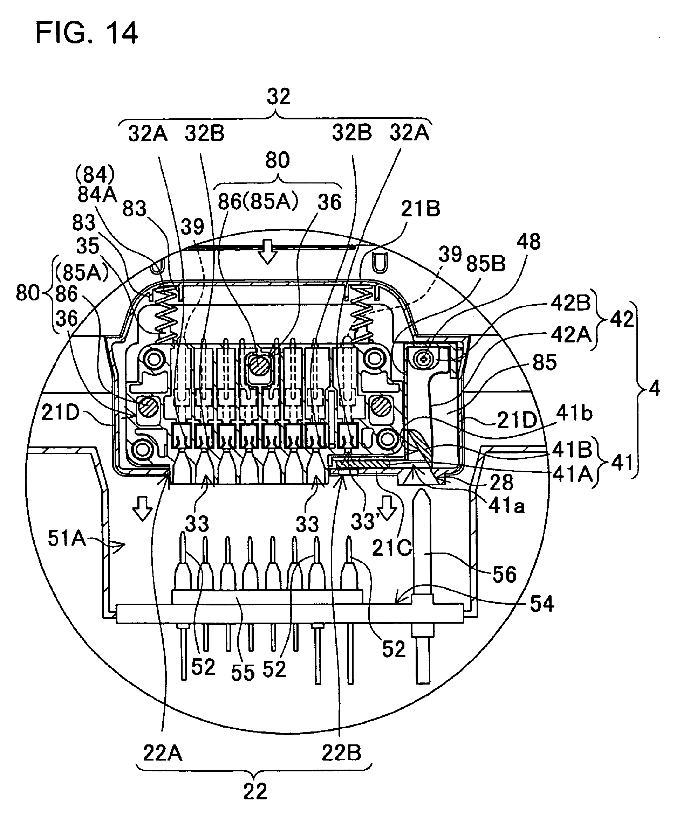

As shown in Figs. 14-16, the connector 3 has a plurality of contacts 32 disposed inside the connector case 31 that connect with connecting terminals 52 inserted in the terminal windows 33, 33'. The connector case 31 of the figures is divided vertically into two parts, and contacts 32 are disposed in a manner insulated from each other between a first case 31A and a second case 31B. The plurality of terminal windows 33, 33' opened in the connector case 31 correspond to the plurality of contacts 32 housed inside the connector case 31 allowing connecting terminals 52 inserted in the terminal windows 33, 33' to be guided into the contacts 32 while insulating adjacent connecting terminals 52. Each contact 32 is connected to the battery block 1 via lead-wires 39 routed out from the connector case 31.

The plurality of contacts 32 housed in the connector case 31 are made up of positive and negative output terminals 32A that supply power from the battery pack to the motor in the electric motor-bike 50A, and a plurality of signal terminals 32B that transmit signals between the battery pack and the electric motor-bike 50A. The connector 3 of the figures has a plurality of contacts 32 laterally arranged in a line, and the contacts 32 at both ends are the positive and negative output terminals 32A. Specifically, the contacts 32 are a plurality of signal terminals 32B disposed between the positive and negative output terminals 32A disposed at each end. This arrangement, which puts separation between the positive and negative output terminals 32A, has the characteristic that the detrimental effects of electric shock and short circuiting can be effectively prevented. However, the positive and negative output terminals are not necessarily required to be disposed at the ends of a plurality of contacts. The two output terminals can also be separated by disposing either one of the output terminals at an end or in an end-region of a plurality of contacts with the other output terminal disposed at an intermediate position, or the two output terminals can be disposed in opposite end-regions. The connector 3 described above opens and closes the terminal window 33' of a positive or negative output terminal 32A disposed at one end or in the end-region of a plurality of contacts via the shutter mechanism 4 described below. The signal terminals 32B transmit battery data such as battery 11 remaining capacity and battery 11 temperature from the battery pack to the electric motor-bike 50A. Each contact 32 shown in Figs. 14-16 has a pair of flexible arms that resiliently sandwiches both sides of each metal blade connecting terminal 52, which is mounted in a vertical orientation and inserts upward from below. The end of each pair of flexible arms has folded sections that are bent mutually inward. The folded sections are established opposite each other, and the gap between the folded sections narrows in the direction of connecting terminal 52 insertion, which is vertically upward from below in the figures. This establishes a configuration the resiliently sandwiches the inserted connecting terminals 52.

The battery pack is provided with a shutter mechanism 4 that is opened by the shutter-opening rod 56 mounted in the loading cavity 51, and opens and closes one part of the plurality of terminal windows 33, 33' in the connector 3 connecting plane 3X. The shutter mechanism 4 of the figures opens and closes the terminal window 33' disposed at one end (the right end in Figs. 14-16), which is one part of the plurality of terminal windows 33, 33' opened in the connector case 31. Namely, the shutter mechanism 4 of the figures is configured to open and close one terminal window 33' adjacent to the alignment projection 34 that protrudes from the bottom surface of the connector case 31. A structure that opens and closes only one terminal window 33' at the end of a row of terminal windows 33, 33' has the characteristic that the shutter 41 can have a limited stroke, the shutter mechanism 4 can be simple, and the assembly can fit in a small space. However, the shutter mechanism can also be configured to open and close a plurality of terminal windows in the end-region of a row of terminal windows.

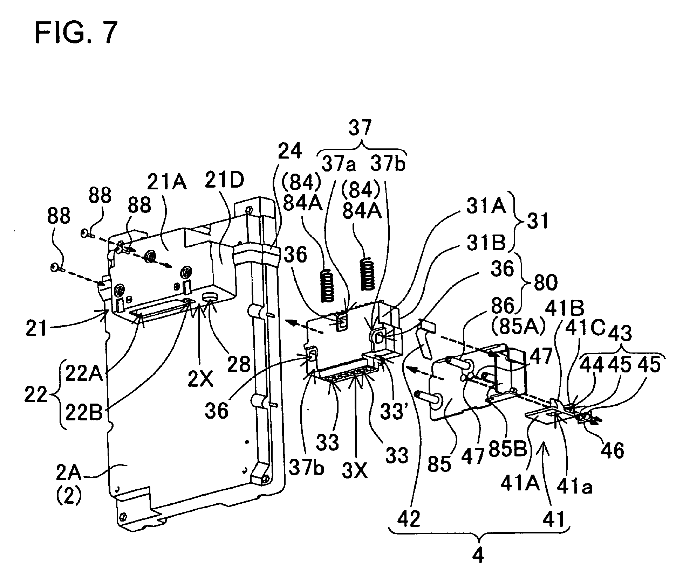

The shutter mechanism 4 shown in Figs. 7-9, and 14-16 is provided with a shutter 41 that moves with reciprocating motion in a direction to open the terminal window 33' in the connector 3 and in a direction to close the terminal window 33', and resilient material 42 that spring-loads the shutter 41 in the closed direction.

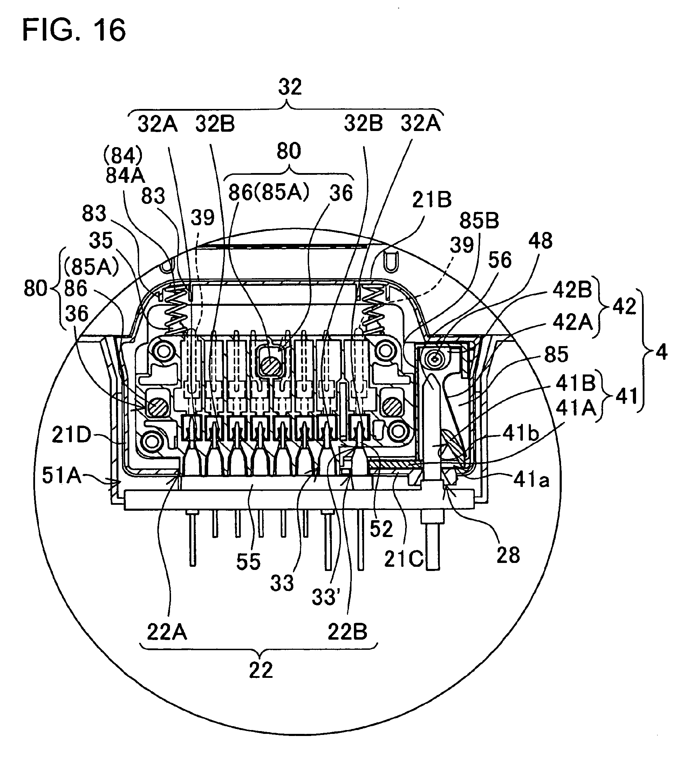

The shutter 41 is provided with a shutter plate 41A that slides along the bottom of the connector case 31 in reciprocating motion to open and close the terminal window 33' disposed at one end (the right end in Figs. 14-16), and an actuator 41 B connected to the shutter plate 41A that is pressed upon by the shutter-opening rod 56 to move the shutter 41 in the open direction. As shown in Fig. 14, when the shutter plate 14A is in the closed position, the corresponding terminal window 33' is closed-off and a connecting terminal 52 cannot be inserted in the terminal window 33'. As shown in Fig. 16, when the shutter plate 14A is in the open position, the corresponding terminal window 33' is opened and a connecting terminal 52 can be inserted.

The actuator 41 B is connected to one end of the shutter plate 41 A and moves the shutter 41 in the open direction when pressed upon by the shutter-opening rod 56 introduced into the shutter mechanism 4. The shutter-opening rod 56 inserts through an insertion window 28 opened in the bottom surface plate 21C of the case extension 21 and is guided it into the shutter mechanism 4. Accordingly, the shutter 41 actuator 41 B is disposed in line with the insertion window 28 in the case extension 21. The shutter plate 41A has a slit 41 a opened to pass the shutter-opening rod 56 inserted through the insertion window 28, and the actuator 41 B is formed in single-piece construction with the shutter plate 41A in a position opposite the slit 41 a. To enable the shutter 41 to move when the actuator 41 B is pressed upon by the shutter-opening rod 56, the part of the actuator 41 B that is contacted and pressed upon by the shutter-opening rod 56 is formed as a sliding plane 41 b that is inclined with respect to the shutter-opening rod 56 insertion direction. The incline of the sliding plane 41 b is in a direction that projects more in the closed direction as separation from the shutter plate 41A increases, and this arrangement causes the shutter 41 to move in the open direction as the shutter-opening rod 56 is inserted. When the actuator 41 B is pressed upon by the end of the shutter-opening rod 56 inserted through the insertion window 28, the end-region of the shutter-opening rod 56 slides along the sliding plane 41 b to move the shutter 41 in the open direction. In the actuator 41 B of the figures, the sliding plane 41 b that is pressed upon by the shutter-opening rod 56 is an inclined surface. However, the sliding plane can also be a curved surface. Further, the degree of actuator 41 B projection in the closed direction is adjusted to stop moving the shutter 41 in the open direction when the shutter 41 has moved to a position that opens the closed terminal window 33'. When the shutter 41 has moved to the open position, the shutter-opening rod 56 no longer presses on the actuator 41 B sliding plane 41 b, but rather the side of the shutter-opening rod 56 slides against the tip of the actuator 41 B as it inserts further into the connector 3.

The shutter 41 described above is connected to the attachment plate 85 mounted in the case 2 and disposed in a fixed position in the case extension 21 via the attachment plate 85. The shutter 41 is joined to the attachment plate 85 through a slide-connector 43 in a manner allowing the shutter 41 to slide back and forth in reciprocating motion along the bottom surface of the connector case 31. The shutter 41 of the figures is provided with a guide-plate 41C attached in a vertical orientation to the side of the shutter plate 41A, and this guide-plate 41C slides along the attachment plate 85 to guide the shutter 41 in the opened and closed directions. The slide-connector 43 of the figures is made up of a slit 44 opened in the guide-plate 41C and sliding projections 45 that insert in the slit 44. The slit 44 has a shape that is elongated in the direction of shutter 41 reciprocating motion. The sliding projections 45 protrude from a connecting plate 46 that connects the guide-plate 41C to the attachment plate 85. The connecting plate 46 is provided with two sliding projections 45 separated in line with the shutter 41 opening and closing directions, and the connecting plate 46 is connected to the attachment plate 85 via two set screws 47. The shutter 41 is connected to the attachment plate 85 with the guide-plate 41C sandwiched between the attachment plate 85 and the connecting plate 46. However, the sliding projections can also be established on the attachment plate instead of on the connecting plate. In addition, the slide-connector can have the slit established in the attachment plate, and the sliding projections established on the guide-plate or the connecting plate. Further, the slide-connector can be any other structure that allows the shutter to move in the opened and closed directions.

The resilient material 42 is a flat spring that is a metal-plate with elasticity. The flat spring resilient material 42 is made up of an attachment section 42B that mounts on the attachment plate 85, and a flexible arm 42A that extends from the attachment section 42B. The resilient material 42 is mounted on the attachment plate 85 via a set screw 48 through the attachment section 42B, and the flexible arm 42A extending from the attachment section 42B is put in contact with the shutter 41 to spring-load it in the closed direction. In the resilient material 42 shown in the figures, the end-region of the flexible arm 42A is put in contact with the backside of the actuator 41 B at the end of the shutter 41.

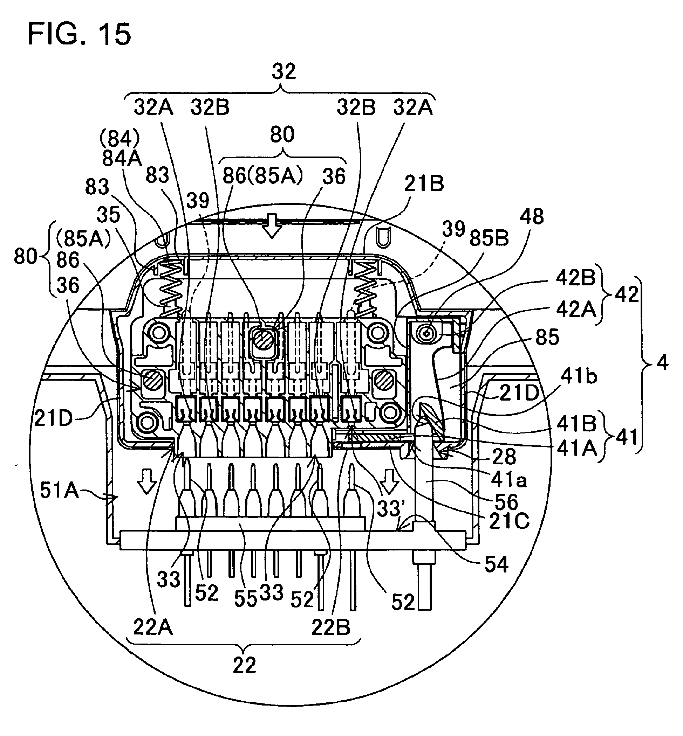

As shown in Fig. 14, when the battery pack is not loaded in the loading cavity 51 and the shutter-opening rod 56 is not inserted in the shutter 41 actuator 41 B, the shutter mechanism 4 described above holds the shutter 41 in the closed position via the resilient material 42 to close-off the corresponding terminal window 33' and prevent foreign material from entering the terminal window 33'. As shown in Fig. 15, when the battery pack is being loaded into the loading cavity 51 and the shutter-opening rod 56 inserts into the insertion window 28, the shutter-opening rod 56 presses on the shutter 41 actuator 41B to slide the shutter 41 in the open direction. The shutter 41 slides in the open direction and opens the corresponding terminal window 33' allowing a connecting terminal 52 to be inserted in the terminal window 33'. As shown in Fig. 16, this situation enables the connecting terminals 52 inserted in the terminal windows 33, 33' to connect with the contacts 32 inside the connector case 31 and make electrical connection between the connector 3 and the connecting terminals 52.

In the shutter mechanism 4 described above, the length of the shutter-opening rod 56 and the configuration of the actuator 41B sliding plane 41 b are adjusted to open the shutter 41 before inserting the connecting terminal 52 in the terminal window 33' during insertion of the battery pack in the loading cavity 51. The electrical apparatus 50 of the figures has a shutter-opening rod 56 that projects out further from the mounting plane 54 in the loading cavity 51 than the connecting terminals 52. As a result, when the battery pack is inserted in the loading cavity 51, first the shutter-opening rod 56 inserts into the insertion window 28, next the shutter 41 is activated by the shutter-opening rod 56 to open the terminal window 33', and finally the connecting terminal 52 inserts in the terminal window 33' and connects with the contact 32 inside the connector case 31.

Further, in the battery pack described above, the connector case 31 is mounted in the battery pack case 2 in a manner that allows it to move freely in the connecting terminal 52 insertion direction. In the battery pack shown in the figures, the connector case 31 is housed inside the case extension 21 and has a floating configuration that allows it to move in the connecting terminal 52 insertion direction. The connector case 31 disposed inside the case extension 21 is connected to the case 2 via the attachment plate 85, and is configured to move in the connecting terminal 52 insertion direction inside the space between one case extension 21 side-wall 21 D and a partition wall 85B established on the attachment plate 85. The connector case 31 is housed inside the case extension 21 in a manner allowing it to move up and down with the alignment projection 34 exposed outside the first window 22A.

The attachment plate 85 disposes the connector case 31 in a set position inside the case extension 21. For the attachment plate 85 of the figures with the connector case 31 disposed inside the case extension 21, the connector case 31 is disposed in a set position sandwiched from both sides by the attachment plate 85 and a surface plate 21A, which is the inside surface of the front of the case extension 21 on the case 2. The attachment plate 85 of the figures is provided with a plurality of connecting bosses 85A that pass through the connector case 31 and are formed in single-piece construction with the attachment plate 85. The ends of these connecting bosses 85A are attached to the case extension 21 surface plate 21A via set screws 88. The attachment plate 85 is attached to the case 2 via the connecting bosses 85A attached to the surface plate 21A. However, the attachment plate can also be directly attached to the case by connecting the perimeter region of the attachment plate without intervening connecting bosses.

The connector case 31 disposed in a floating configuration inside the case extension 21 has a range of movement that is set by a guiding mechanism 80. The guiding mechanism 80 of the figures is configured with guiding holes 36 established through the connector case 31, and guide rods 86 that insert through the guiding holes 36 and are attached to the battery pack case 2.

A plurality of guiding holes 36 are opened through the connector case 31, and guide rods 86 are inserted through the guiding holes 36. The guiding holes 36 of the figures are opened through the connector case 31 in the direction that the case extension 21 protrudes out from the case 2. The guiding holes 36 opened through the connector case 31 have an inside shape that is larger than the outside shape of the guide rods 86. The guide rods 86 can move inside and relative to the guiding holes 36 allowing the connector case 31 to move inside the case extension 21. The connector case 31 shown in the figures has guiding holes 36 opened through both sides and through the center of the upper region. To allow the connector case 31 to move in the connecting terminal 52 insertion direction, the guiding holes 36 are long holes extended in the direction of connecting terminal 52 insertion. In the connector case 31 of the figures, the long holes are rectangular in shape. However, the long holes can also be extended circular holes.

The guide rods 86 are attached to the case 2 opposite the guiding holes 36 established through the connector case 31. The guide rods 86 are inserted through the connector case 31 guiding holes 36 and the ends of the guide rods 86 are attached via set screws 88 to the surface plate 21A, which is the front of the case extension 21. In the battery pack of the figures, connecting bosses 85A formed in single-piece construction with the attachment plate 85 serve as the guide rods 86. Therefore, the attachment plate 85 of the figures has a plurality of connecting bosses 85A established opposite the connector case 31 guiding holes 36 that act as guide rods 86. In this structure, the connecting bosses 85A serving as guide rods 86 set the range of connector case 31 movement while attaching the attachment plate 85 to the case 2. However, the guide rods can also be separate material from the connecting bosses. Further, the attachment plate does not necessarily have to be formed as a single unit with connecting bosses, and separate guide rods can be attached to a flat attachment plate to attach the attachment plate to the case via the guide rods.

With the guiding mechanism 80 described above, the guide rods 86 move inside the guiding holes 36 of the connector case 31 disposed inside the case extension 21. More accurately, the guiding holes 36 are moved with respect to the guide rods 86 attached to the case extension 21 to move the connector case 31 in a given direction inside the case extension 21.

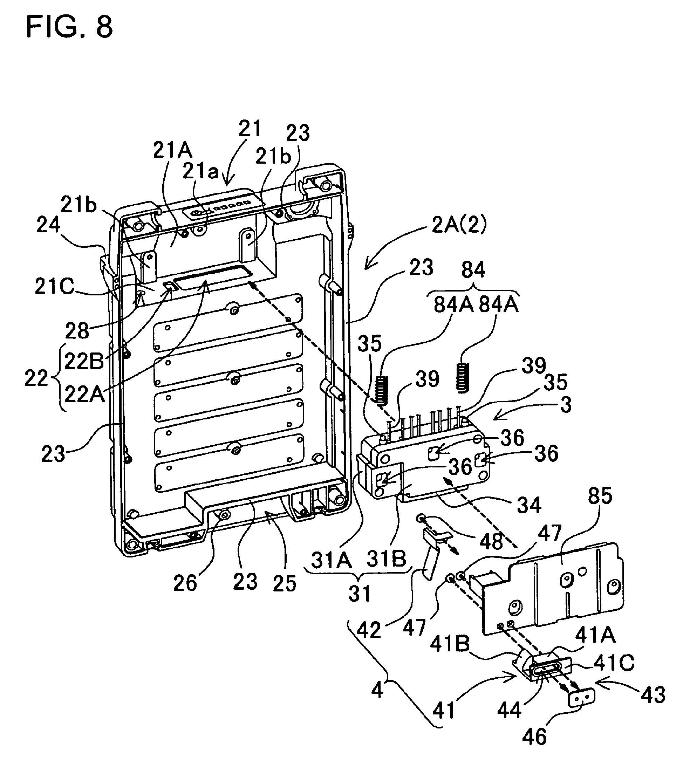

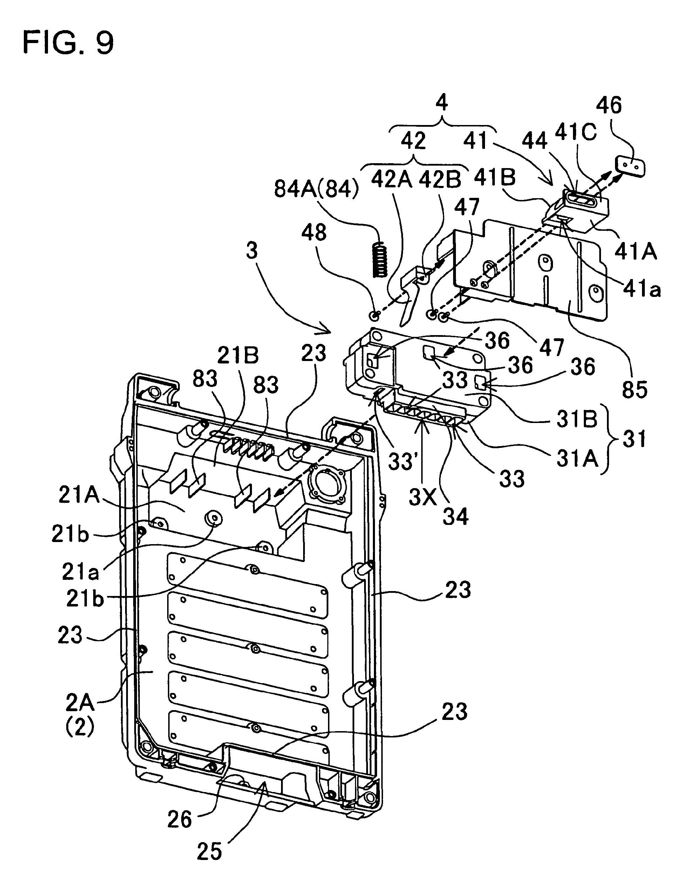

Further, to enable smooth movement of the connector case 31 between the case extension 21 surface plate 21A and the attachment plate 85 of the battery pack in the figures, the surface area of both sides of the connector case 31 contacting the surface of the attachment plate 85 and the inside surface of the surface plate 21A is reduced. The attachment plate 85 shown in the figures is provided with step projections 87 at the bases of the guide rods 86 that make contact with the surface of the connector case 31. Since only the step projection 87 surfaces, rather than the entire surface of the attachment plate 85, make contact with the surface of the connector case 31, sliding resistance is reduced allowing the connector case 31 to slide smoothly. Further, the battery pack of the figures has connecting projections 21 a, 21 b provided on the inside surface of the surface plate 21A at the interface of the inside surface of the surface plate 21A with the connector case 31. In addition, the surface of the connector case 31 is provided with alignment slots 37 that align with the connecting projections 21 a, 21 b. The alignment slots 37 shown in the figures are provided around the perimeters of the guiding holes 36 established in the connector case 31, the area opened by the alignment slots 37 is greater than that opened by the guiding holes 36 forming stepped regions at the guiding holes 36, and the inside shapes of the alignment slot 37 openings are larger than the outside shapes of the connecting projections 21 a, 21 b. As shown in Figs. 8 and 9, the connecting projection 21 a established at the center of the upper part of the surface plate 21A has a circular outline. As shown in Fig. 7, the alignment slot 37a that aligns with that connecting projection 21 a has a rectangular inside shape. As shown in Fig. 8, the connecting projections 21 b established at both sides of the surface plate 21 A have shapes that extend in the vertical direction. As shown in Fig. 7, the alignment slots 37b that align with those connecting projections 21b have connector case 31 corners cut-out and have rectangular shapes extending in the vertical direction. Since the front end-planes of these connecting projections 21a, 21b make contact with and slide with respect to bottom surfaces of the alignment slots 37a, 37b, the sliding resistance between the connector case 31 and the surface plate 21A is reduced allowing smooth movement.

Further, to allow the connector case 31 to move flexibly up and down inside the case extension 21, the connector case 31 is disposed inside the case extension 21 through spring material 84. The spring material 84 shown in the figures is coiled spring 84A. The coiled spring 84A spring material 84 is disposed between the upper surface of the connector case 31 and the inside surface of the upper surface plate 21B of the case extension 21, and acts to resiliently press the connector case 31 downward. To apply balanced spring action on the connector case 31, the battery pack of the figures has two coiled springs 84A disposed on the two sides of the upper surface of the connector case 31. To dispose the coiled springs 84A in prescribed positions, connecting rods 35 that insert into the coiled springs 84A are established protruding from the upper surface of the connector case 31. In addition, pairs of guide ribs 83 projecting downward from the inside surface of the upper surface plate 21 B are provided at the locations of the connecting rods 35. The connecting rods 35 are inserted in the bottom ends of the coiled springs 84A, and the upper ends of the coiled springs 84A align between pairs of guide ribs 83 to dispose the coiled springs 84A in prescribed locations. The connector case 31, which is pressed downward by the coiled spring 84A spring material 84, moves resiliently up and down inside the case extension 21. As a result, up and down vibration of the case 2 during electric motor-bike 50A operation is absorbed by the spring material 84 to effectively prevent transmission of case 2 vibration to the connector case 31.

As shown in Fig. 14, when the battery pack described above is not loaded in the loading cavity 51, namely when the connecting terminals 52 are not inserted in the connector case 31 terminal windows 33, 33', the connector case 31 is pressed downward by the spring material 84 to a low position inside the case extension 21. In this position, the alignment projection 34 protrudes out from the first window 22A. As shown in Fig. 16, when the battery pack is loaded in the loading cavity 51 and the connecting terminals 52 are inserted deeply into the terminal windows 33, 33', the connecting terminals 52 are connected with the contacts 32 inside the connector case 31. At this time, the connector case 31 is moved higher relative to the case extension 21, the bottom surface of the alignment projection 34 is in contact with the upper surface of an attachment pedestal 55, which holds the connecting terminals 52, and the connector case 31 and attachment pedestal 55 are joined together in close contact.

With the connector case 31 attached to the case 2 in a floating configuration, which allows the connector case 31 to move freely up and down with respect to the case 2, the connector case 31 connected with the connecting terminals 52 can move independently from the case 2 when the battery pack is vibrated up and down during vehicle operation. Accordingly, the connector case 31, which is connected with the connecting terminals 52, does not vibrate relative to the connecting terminals 52, and the connecting terminals 52 and connector case 31 are retained as a connected unit. Consequently, shift in the relative connecting positions of the connecting terminals 52 and the contacts 32 can be effectively prevented and contact resistance malfunction can be reliably prevented.

In the battery pack described above, the connector case 31 is joined to the battery pack case 2 in floating configuration that allows the connector case 31 to move in the connecting terminal 52 insertion direction. However, the connector case does not necessarily have to be connected to the case in a manner allowing free movement in the connecting terminal insertion direction, and the connector case can also be fixed to the case.

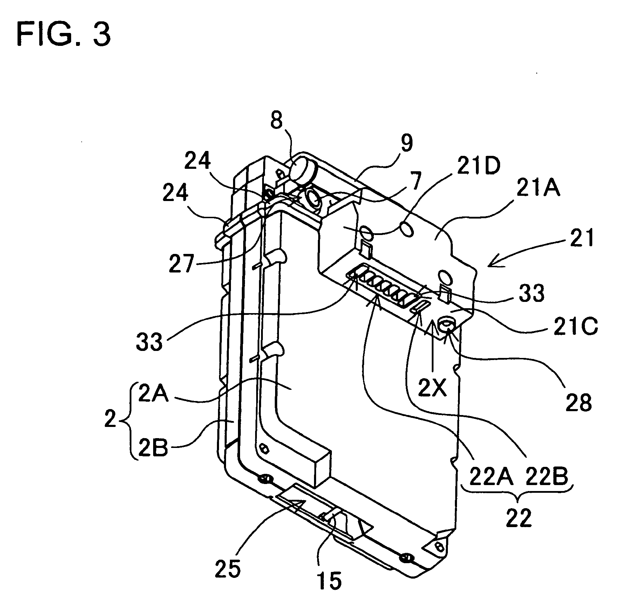

Further, the battery pack of Fig. 3 has a charging sub-connector 7 that connects to a battery charger to charge the batteries 11. The sub-connector 7 is mounted on the upper part of the case 2 and is connected to the battery block 1 via lead-wires (not illustrated). The case 2 is provided with an opening 27 to expose the sub-connector 7 outside the case, and a removable closing cap 8 is provided to close the opening 27. When the sub-connector 7 is not in use, namely when the battery pack is loaded in the loading cavity 51, the removable closing cap 8 is placed to close-off the opening 27 in the case 2 and prevent ingress of foreign material.

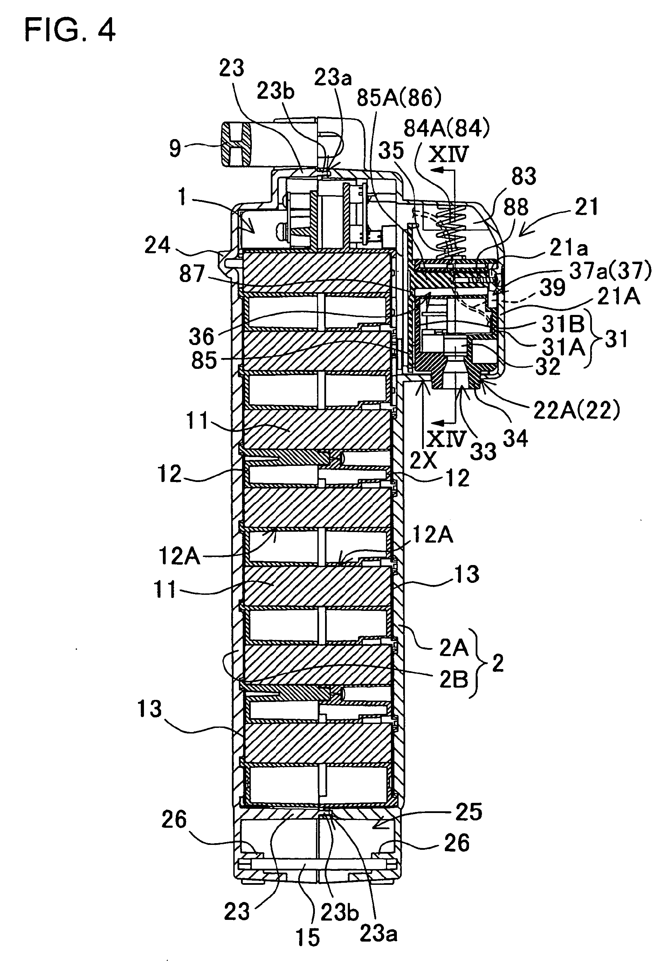

The case 2 is made up of a first case 2A and a second case 2B formed from plastic, and the first case 2A and the second case 2B are joined by screws 29. Inner walls 23 are formed in single-piece construction to hold the battery block 1 inside the inner walls 23 of the case 2. The battery block 1 is held inside the inner walls 23 of a case 2. Further, as shown in Fig. 4, the inner walls 23 established in the first case 2A and the second case 2B are provided with connecting grooves 23a on one side, and connecting ridges 23b that insert into the connecting grooves 23a on the other side. When the first case 2A and the second case 2B are connected, the inner wall 23 connecting ridges 23b are aligned in the connecting grooves 23b to more reliably prevent water and foreign objects from entering inside the inner walls 23.

The case extension 21 that houses the connector 3 is established protruding from one side of the surface of the case 2. The case 2 of Figs. 1 and 3-5 has the case extension 21 formed from plastic in single-piece construction with the first case 2A. The case extension 21 has a shape that allows it to hold the connector 3 inside, namely the inside shape of the case extension 21 is made larger than the outside shape of the connector 3. The case extension 21 of the figures has a constant thickness that can hold the connector 3, the upper surface plate 21B and the bottom surface plate 21C are parallel, and the two side-walls 21D are also parallel. However, the case extension can also have inclined side-walls that slope on both sides to taper the case extension and make in gradually narrower towards the bottom.

The case extension 21 is established on the case 2 in a location that positions the bottom surface of the case extension 21 above the bottom of the case 2 when the battery pack is loaded in the electrical apparatus 50. Location of the case extension 21 at this vertical position on the case 2 serves to dispose the connector 3 terminal windows 33, 33' above the bottom of the case 2. For example, if we suppose the connector is established at the bottom of the case and material such as dirt, water, and foreign objects enter the electric motor-bike 50A loading cavity, electrical contact failure at the connector becomes a concern. However, since the case extension 21 of the battery pack of the present embodiment is established on a vertical wall of the case 2 with the bottom surface of the case extension 21 disposed above the bottom surface of the case 2, occurrence of this type of failure can be reduced. For the case 2 in Figs. 1 and 3-5, the case extension 21 bottom surface is disposed above the center of the vertical height of the case 2. However, although not illustrated, the case extension bottom surface can also be disposed above the bottom of the case at the center, or below the center of the vertical height of the case.

The bottom surface of the case extension 21 is opened through case 2 windows 22 to expose the connector 3 terminal windows 33, 33' outside the surface of the case 2. The bottom surface of the case extension 21 of the figures has a first window 22A that accepts connector case 31 alignment projection 34 insertion, and a second window 22B that exposes the terminal window 33' opened adjacent to the alignment projection 34. The case extension 21 of Figs. 7 and 8 has a rectangular shaped first window 22A, and the alignment projection 34 also has a rectangular outline. The bottom surface of the case extension 21, which is the bottom surface plate 21C, can be made with a thickness equal to the projection height of the alignment projection 34 to avoid protrusion of the alignment projection 34 out the bottom surface of the case extension 21.

Further, the case 2 of Figs. 1-5 is provided with a sealing rim 24 protruding from the perimeter of the upper part of the case 2 that closes-off the gap between the battery pack case 2 and the loading cavity 51 in the electrical apparatus 50. Since the case extension 21 is established in a manner that protrudes from the surface of the case 2, the sealing rim 24 is established around all parts of the case 2 except where the case extension 21 is disposed. As shown in Figs. 10-13, when the battery pack is inserted into the electric motor-bike 50A loading cavity 51, the sealing rim 24 is inserted into the loading cavity 51 after almost all of the battery pack has been inserted. Therefore, while allowing smooth insertion of the battery pack, the sealing rim 24 closes-off the gap 53 between the fully inserted battery pack and the loading cavity 51, and the battery pack is disposed in a fixed position. When the case 2 and the electrical apparatus 50 loading cavity 51 are fabricated, the mold extraction direction for the mold that forms the case 2 is different than the mold extraction direction for the mold that forms the loading cavity 51. Consequently, the case 2 and the loading cavity 51 cannot be fabricated with closely matching dimensions for a tight fit. In particular, the loading cavity 51 shown in the figures has an interior shape with a width that becomes gradually narrower towards the bottom, and that sets the mold extraction gradient during plastic molding. Consequently, by providing the sealing rim 24, the gap 53 between the battery pack and the loading cavity 51 is closed-off, case 2 vibration and movement is prevented, and the introduction of foreign objects, dirt, and dust etc. into the gap 53 is prevented.

Further, the bottom part of the case 2 shown in Figs. 3-5 is provided with a locking pin 15 that locks in a detachable manner into a locking mechanism 60 established at the bottom of the electrical apparatus 50 loading cavity 51. The case 2 shown in the figures is provided with a cavity 25 opened in the bottom surface, and the locking pin 15 is disposed inside that cavity 25. In the case 2 of the figures, the cavity 25 is opened extending in the lengthwise direction of the bottom surface of the case 2, and the locking pin 15 is fixed in a horizontal orientation bridging the lateral width at the center section of the bottom surface. The locking pin 15 is a metal rod that is inserted at both ends into cylindrical holes 26 established in the case 2 to dispose it in a fixed position in the cavity 25. In the case 2 of Fig. 4, a pair of cylindrical holes 26 are formed in opposing positions on the inside surfaces of the first case 2A and the second case 2B, and the first case 2A and the second case 2B are connected together with both ends of the locking pin 15 inserted in the pair of cylindrical holes 26 to dispose the locking pin 15 inside the cavity 25.

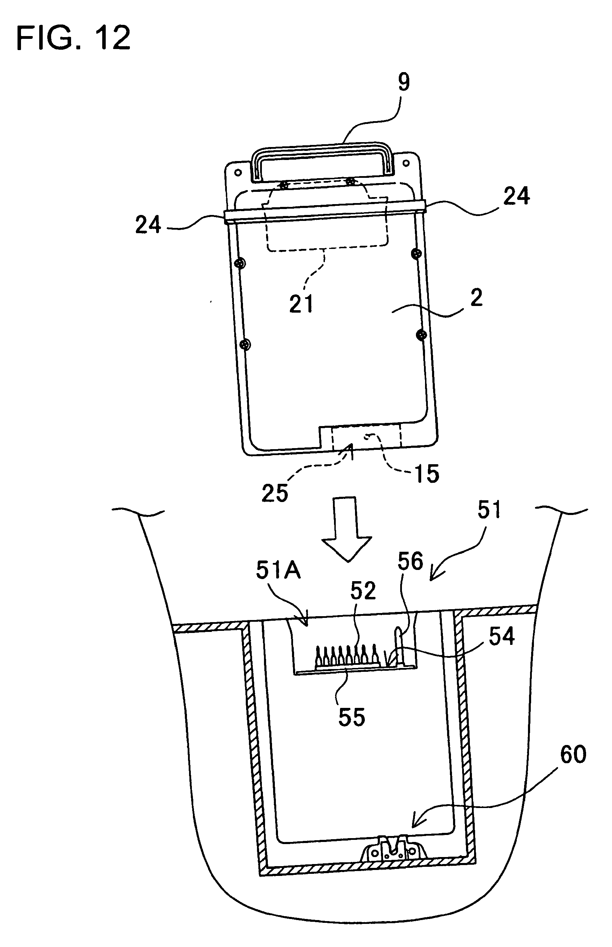

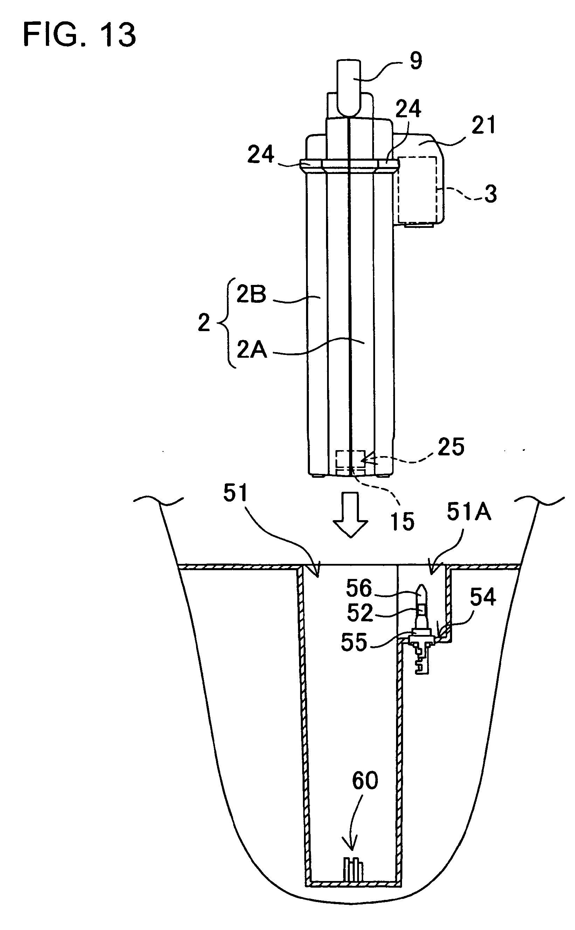

As shown in Figs. 12 and 13, when the battery pack is inserted in the electrical apparatus 50 loading cavity 51, a locking mechanism 60 projecting out from the bottom surface of the loading cavity 51 is guided into the cavity 25 provided at the bottom of the case 2 to connect with the locking pin 15 disposed inside the cavity 25 and retain it in a locked state. By holding the locking pin 15 with the locking mechanism 60, up and down movement of the battery pack is restrained, and separation and abrading at the connector 3 connection region is effectively prevented. In particular, since the bottom of the case 2 is held fixed by the locking mechanism 60 and the locking pin 15 and the top of the case 2 is held on the inside of the loading cavity 51 by the sealing rim 24, the case 2 is held in a fixed position vertically, and vibration and movement of the case 2 inside the loading cavity 51 can be reliably avoided.

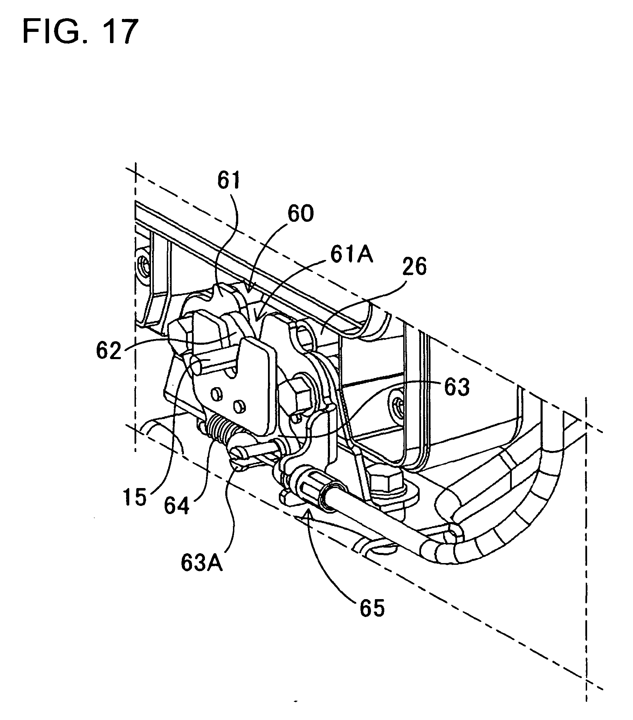

The locking mechanism 60 provided at the bottom of the electrical apparatus 50 loading cavity 51 is a mechanism that locks and retains the locking pin 15 when the locking pin 15 is inserted, and allows the locking pin 15 to be pulled out when a lock release mechanism 65 is activated to unlock the locking pin 15. Locking mechanisms presently in general use can be utilized. The locking mechanism 60 shown in Figs. 17-19 is provided with a base-plate 61 that has an insertion groove 61 A with an open upper end for locking pin 15 insertion; a locking-plate 62 connected to the base-plate 61 in a manner free to pivot around a first rotation axis 66, and having a locking groove 62A where the locking pin 15 can insert in a removable manner; a cam-plate 63 connected to the base-plate 61 in a manner free to pivot around a second rotation axis 67 and latch the locking-plate 62 into a locked position; spring material 64 that acts to pull together the bottom ends of the locking-plate 62 and the cam-plate 63; and a lock release mechanism 65 that rotates the cam-plate 63 to release the locking-plate 62 from the locked position.

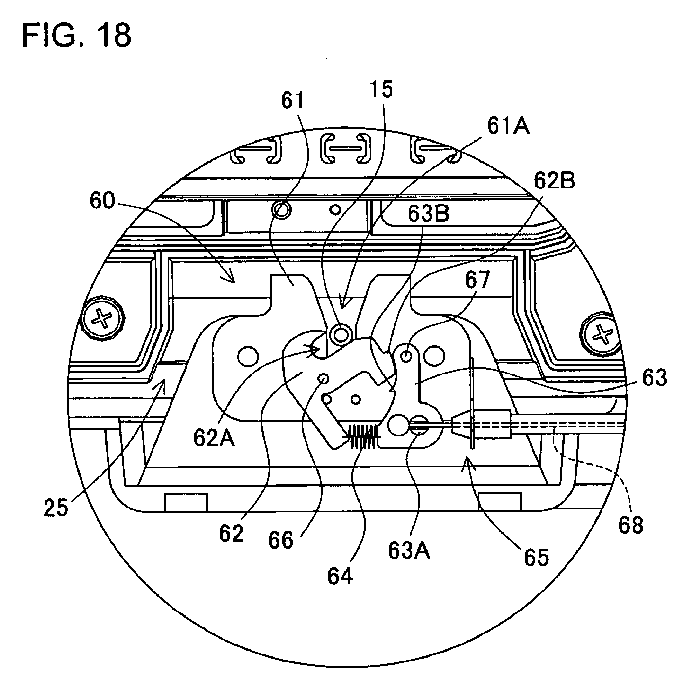

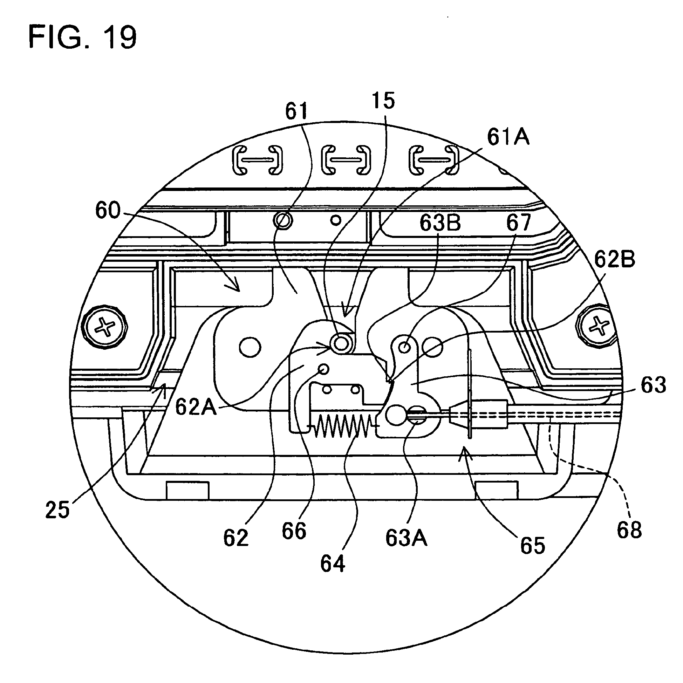

As shown in Fig. 18, when the battery pack is inserted into the loading cavity 51, the locking pin 15 inserts into the insertion groove 61A in the base-plate 61 of the locking mechanism 60. The locking pin 15 in the insertion groove 61A inserts into the locking-plate 62 locking groove 62A, which faces upward in the unlocked position. The locking-plate 62 rotates around the first rotation axis 66 to the locked position shown in Fig. 19. In that position, a latch section 62B on the locking-plate 62 interlocks with a latch section 63B on the cam-plate 63 to retain the locking pin 15 in the locking-plate 62 in a locked state that does not allow the locking pin 15 to pull out. In this locked state, the battery pack is set in the loading cavity 51 in a manner that cannot be pulled out. When removing the battery pack from the loading cavity 51, the lock release mechanism 65 is activated to release the locking pin 15 from the locked position. The lock release mechanism 65 of the figures is provided with a cable 68 with one end connected to a connecting section 63A on the cam-plate 63 and the other end having an activating mechanism such as a lever or key (not illustrated). The activating mechanism is operated to pull the cable 68, which rotates the cam-plate 63 around the second rotation axis 67. When the activating mechanism is operated to rotate the cam-plate 63, the locked state established by the latch sections on the cam-plate 63 and locking-plate 62 is unlocked, and the locking-plate 62 rotates back to the unlocked position shown in Fig. 18. In this state, the locking pin 15 is unlocked, and the battery pack can be removed from the loading cavity 51.

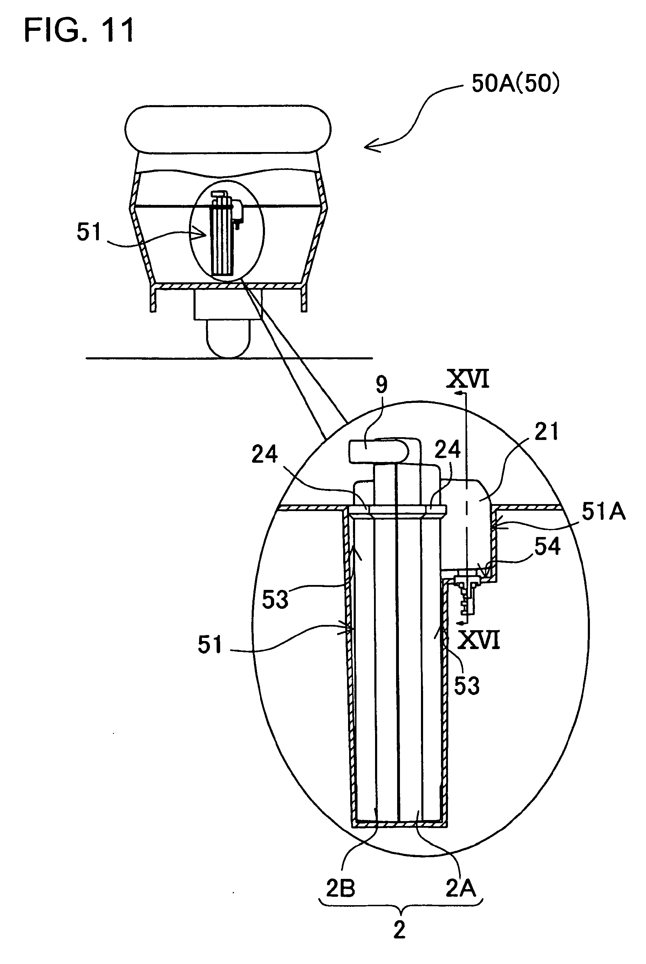

Further, the battery pack of Figs. 1-5 is provided with a folding grip 9 on the upper part of the case 2. The grip 9 is extended upward when the battery pack is loaded into or unloaded from the loading cavity 51. As shown in Fig. 11, the grip is folded downward when the battery pack is loaded and set inside the loading cavity 51. The user can easily load and unload this battery pack by holding the grip 9.

As shown in Figs. 10-13, the battery pack described above inserts downward into the loading cavity 51 of an electrical apparatus 50, which is an electric motor-bike 50A, and is retained in a fixed position. In the electric motor-bike 50A electrical apparatus 50 shown in the figures, the inside of the loading cavity 51 is provided with a mounting plane 54 opposite the battery pack case extension 21 bottom surface, which is the underside surface 2X. The loading cavity 51 of the figures is provided with an extension cavity 51 A on its inside surface to accept the case extension 21. The bottom surface of the extension cavity 51A is the mounting plane 54 that faces the bottom surface of the case extension 21. As shown in Figs. 11-13, the electrical apparatus 50 mounting plane 54 is disposed above the bottom of the loading cavity 51, and the connecting terminals 52 and the shutter-opening rod 56 are mounted on the mounting plane 54 in a vertical orientation. The battery pack inserted in the loading cavity 51 has the bottom surface of the case extension 21 disposed at the mounting plane 54, and the connector 3 connects to the connecting terminals 52 above the bottom of the loading cavity 51.

The battery pack described above has the connector 3 housed inside a case extension 21 that protrudes out from the surface of the case 2. However, in the present invention, the connector does not necessarily have to be disposed in a case extension protruding from the case of the battery pack. The connector can also be disposed inside the end of the case or the side of the case, and the terminal windows can be exposed outside the end or side of the case. Further, the battery pack of the present invention does not necessarily have to be configured to load downward into the loading cavity of the electrical apparatus. The battery pack can also be inserted into, and connected with an electrical apparatus having a loading cavity that opens in a horizontal direction or in a direction inclined relative to the horizontal direction.

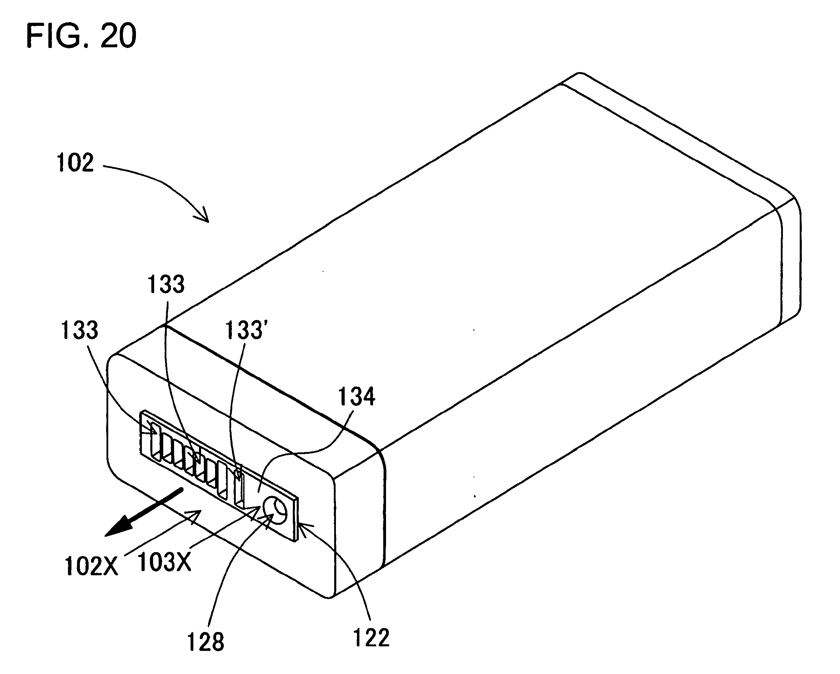

The battery pack shown in Figs. 20-22 is configured to insert horizontally into an electrical apparatus 150 loading cavity 151. This battery pack loads horizontally into an electrical apparatus 150 having a loading cavity 151 opened in the horizontal direction. Accordingly, the electrical apparatus 150 has a plurality of connecting terminals 152 and a shutter-opening rod 156 attached to a loading cavity 151 mounting plane 154 in a manner projecting in the horizontal direction, which is the battery pack insertion direction. The battery pack of the figures holds a connector 103 inside the end of the case 102, which houses a plurality of batteries. A plurality of terminal windows 133, 133' established in the connector 103 are exposed from an insertion-side connecting surface 102X at the end of the case 102. The connector 103 of the figures has a plurality of terminal windows 133, 133' that accept connecting terminal 152 insertion opened in a line through a connecting plane 103X at the end of the connector case 131. The connector case 131 of the figures is provided with an alignment projection 134 that protrudes from the end of the connector case 131, and the terminal windows 133, 133' are arranged inside the alignment projection 134. The connector case 131 alignment projection 134 fits into a window 122 opened through the connecting surface 102X at the end of the case 102, and all of the terminal windows 133, 133' are exposed through that window 122. In the battery pack of the figures, the connector case 131 is mounted in a fixed position inside the case 102. However, the connector case can also be joined to the case in a floating configuration as described previously that allows the connector case to move relative to the case.

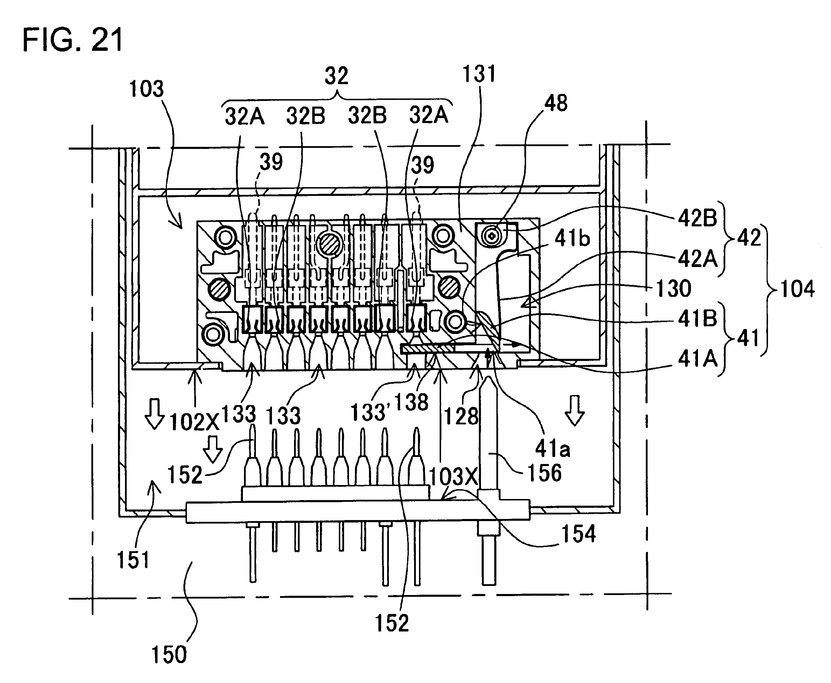

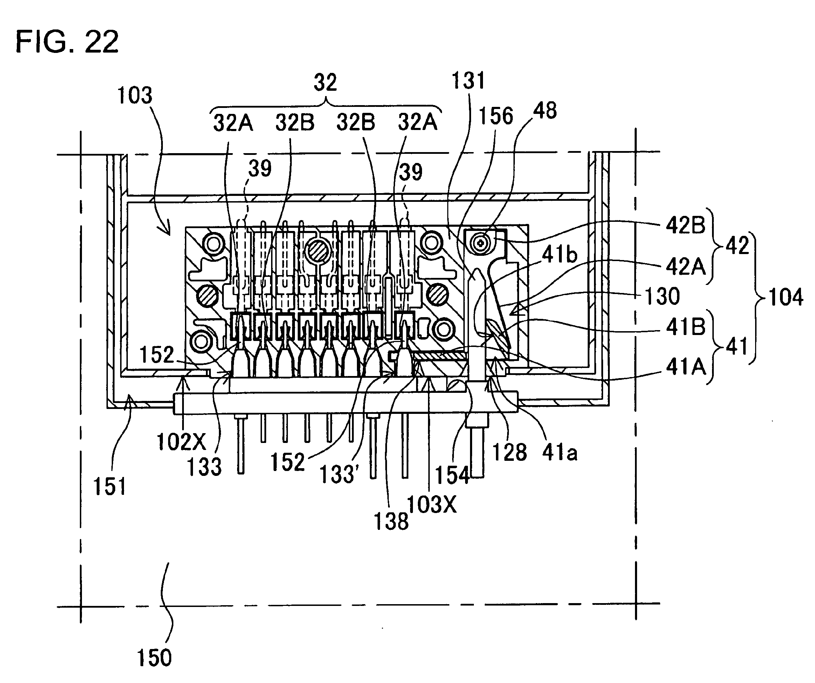

Further, the battery pack of Figs. 21 and 22 has a shutter mechanism 104 housed in the connector case 131 of the connector 103. In the figures, space 130 is provided inside one end of the connector case 131 to hold the shutter mechanism 104, and a shutter 41 and resilient material 42 are housed in that space 130. An insertion window 128 is opened in the connecting plane 103X alignment projection 134 to guide insertion of the shutter-opening rod 156 into the connector case 131 shutter mechanism 104 space 130 when the battery pack is loaded in the loading cavity 151. The connector case 131 has the plurality of terminal windows 133, 133' and the insertion window 128 established in a line in the alignment projection 134.

The shutter mechanism 104 housed in the connector case 131 has the same configuration as the shutter mechanism 4 shown in Figs. 14-16. Specifically, the shutter mechanism 104 is configured with a shutter 41 having a shutter plate 41A with an actuator 41 B established at one end. The shutter 41 is spring-loaded in the closed direction by the resilient material 42, and the actuator 41 B is pressed upon by the shutter-opening rod 156 inserted in the insertion window 128 to move the shutter 41 in the open direction. The shutter mechanism 104 moves the shutter 41 in reciprocating motion inside the connector case 131 to open and close the terminal window 133' at one end of the plurality of terminal windows 133, 133' opened through the connector case 131 connecting plane 103X. The connector case 131 of the figures is provided with a guide groove 138 inside the connecting plane 103X that enables the shutter plate 41A of the shutter 41 to slide back and forth. The guide groove 138 intersects with the terminal window 133' allowing the terminal window 133' to be opened and closed by the shutter plate 41A. The shutter plate 41A moves with reciprocating motion inside the guide groove 138 to move between a position that closes-off the terminal window 133' and a position that opens the terminal window 133'.

As shown in Fig. 21, when the battery pack is not loaded in the loading cavity 151 and the shutter-opening rod 156 is not inserted in the shutter 41 actuator 41 B, the shutter mechanism 104 described above holds the shutter 41 in the closed position via the resilient material 42 to close-off the corresponding terminal window 133' and prevent foreign material from entering the terminal window 133'. When the battery pack is loaded into the loading cavity 151 and the shutter-opening rod 156 inserts into the insertion window 128, the shutter-opening rod 156 presses on the shutter 41 actuator 41 B to slide the shutter 41 in the open direction. The shutter 41 slides in the open direction and opens the corresponding terminal window 133' allowing a connecting terminal 152 to be inserted in the terminal window 133'. As shown in Fig. 22, this situation enables the connecting terminals 152 inserted in the terminal windows 133, 133' to connect with the contacts 32 inside the connector case 131 and make electrical connection between the connector 103 and the connecting terminals 152.

The shutter mechanism 4, 104 described above is configured to slide the shutter 41 in a straight line in the opened and closed directions to open and close the terminal window 33', 133' at one end. However, the shutter mechanism is not restricted to a configuration that moves the shutter in a straight line with reciprocating motion to open and close the terminal window. Although not illustrated, the shutter mechanism can also be configured to move the shutter and open and close the terminal window via a tilting mechanism instead of a sliding mechanism. It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims.

## Claims

1. A battery pack to supply power to an electrical apparatus (50, 150), the battery pack comprising:
a plurality of batteries (11) that can be charged;
a case (2, 102) that houses the batteries (11); and
a connector (3, 103) attached to the case (2, 102) that is capable of connecting with connecting terminals (52, 152) of the electrical apparatus (50, 150) to supply power from the batteries (11) housed in the case (2),
wherein the connector (3, 103) has a plurality of terminal windows (33, 33', 133, 133') opened in a row in a connecting plane (3X, 103X) on an insertion-side of the case (2, 102) for connection with the connecting terminals (52, 152) when the battery pack is inserted in a loading cavity (51, 151) of the electrical apparatus (50, 150), and the terminal windows (33, 33', 133, 133') are exposed through the battery pack case (2, 102),
the battery pack further comprises a shutter mechanism (4, 104) that opens and closes only one part of the plurality of terminal windows (33, 33', 133, 133') in the connector (3, 103), wherein
the connector (3, 103) is provided with a plurality of contacts (32) that connect with connecting terminals (52, 152) inserted in the terminal windows (33, 33', 133, 133'), and the contact (32) in the terminal window (33', 133') opened and closed by the shutter mechanism (4, 104) is the positive or negative output terminal (32A),
**characterized in that**
the case (2, 102) additionally has an insertion window (28, 128) arranged for guiding a shutter-opening rod (56, 156) of the electrical apparatus (50, 150) mounted in the loading cavity (51, 151) into the shutter mechanism (4, 104), wherein
when the battery pack is not loaded in the loading cavity (51, 151) and the shutter-opening rod (56, 156) is not inserted into the shutter mechanism (4, 104), the shutter mechanism (4, 104) closes-off the terminal window (33', 133') positioned at the end of the row of terminal windows (33, 33', 133, 133'); and
when the battery pack is loaded in the loading cavity (51, 151) and the shutter-opening rod (56, 156) is inserted into the shutter mechanism (4, 104), the shutter mechanism (4, 104) opens the terminal window (33', 133') positioned at the end of the row of terminal windows (33, 33', 133, 133').

2. The battery pack as cited in claim 1 wherein the shutter mechanism (4, 104) is provided with a shutter (41) that opens and closes with reciprocating motion in a direction that closes-off the connector (3, 103) terminal windows (33', 133') and in a direction that opens the terminal windows (33', 133'), and resilient material (42) that spring-loads the shutter (41) in the closed direction, and
wherein when the shutter-opening rod (56, 156) is not inserted in the shutter mechanism (4, 104), the shutter (41) is spring-loaded closed by the resilient material (42) to close-off the connector (3, 103) terminal windows (33', 133'); and when the shutter-opening rod (56, 156) is inserted in the shutter mechanism (4, 104), the shutter (41) is pushed in the open direction by the shutter-opening rod (56, 156) to open the connector (3, 103) terminal windows (33', 133').

3. The battery pack as cited in claim 2 wherein the shutter (41) is provided with an actuator (41 B) that moves the shutter (41) in the open direction when pressed upon by the shutter-opening rod (56, 156), the actuator (41 B) is provided with a sliding plane (41 b) that slants or curves with respect to the shutter-opening rod (56, 156) insertion direction; and the shutter-opening rod (56, 156) presses against the sliding plane (41 b) to slide the shutter (41) in the open direction when the shutter-opening rod (56, 156) is inserted in the shutter mechanism (4, 104).

4. An electrical apparatus (50, 150) loading a battery pack cited in any one of the claims 1-3, the electrical apparatus comprising:
the battery pack;
a loading cavity (51, 151) capable for loading the battery pack;
a plurality of connecting terminals (52, 152) mounted in the loading cavity (51, 151) for insertion into the terminal windows (33, 33', 133, 133'); and
a shutter-opening rod (56, 156) mounted in the loading cavity (51, 151) for insertion into the insertion window (28, 128).

## Patentansprüche

1. Batteriepack zum Zuführen von Energie zu einer elektrischen Vorrichtung (50, 150), wobei das Batteriepack umfasst:
eine Vielzahl von Batterien (11), die geladen werden können;
ein Gehäuse (2, 102), das die Batterien (11) aufnimmt; und
einen Anschluss (3, 103), der an dem Gehäuse (2, 102) befestigt ist und der geeignet ist, mit Verbindungs-Anschlussstellen (52, 152) der elektrischen Vorrichtung (50, 150) verbunden zu werden, um Energie von den Batterien (11) zu liefern, die in dem Gehäuse (2) aufgenommen sind,
wobei der Anschluss (3, 103) eine Vielzahl von Anschlussfenstern (33, 33', 133, 133') aufweist, die in einer Reihe in einer Verbindungsebene (3X, 103X) auf einer Einführungsseite des Gehäuses (2, 102) zur Verbindung mit den Verbindungs-Anschlussstellen (52, 152) geöffnet sind, wenn das Batteriepack in einen Ladehohlraum (51, 151) der elektrischen Vorrichtung (50, 150) eingeführt ist, und die Anschlussfenster (33, 33', 133, 133') durch das Batteriepack-Gehäuse (2, 102) freiliegend sind,
das Batteriepack ferner einen Schließmechanismus (4, 104) umfasst, der nur einen Teil der Vielzahl von Anschlussfenstern (33, 33', 133, 133') in dem Anschluss (3, 103) öffnet und schließt, wobei
der Anschluss (3, 103) mit einer Vielzahl von Kontakten (32) versehen ist, die mit Verbindungs-Anschlussstellen (52, 152) verbinden, die in die Anschlussfenster (33, 33', 133, 133') eingeführt sind und der Kontakt (32) in dem Anschlussfenster (33', 133'), das durch den Schließmechanismus (4, 104) geöffnet und geschlossen wird, der positive oder negative Ausgangsanschluss (32A) ist,
**dadurch gekennzeichnet, dass**
das Gehäuse (2, 102) zusätzlich ein Einführungsfenster (28, 128) aufweist, das zur Führung eines Verschluss-Öffnungsstabes (56, 156) der elektrischen Vorrichtung (50, 150), der in dem Lade-Hohlraum (51, 151) angebracht ist, in den Schließmechanismus (4, 104) angeordnet ist, wobei
wenn das Batteriepack nicht in den Lade-Hohlraum (51, 151) geladen ist und der Verschluss-Öffnungsstab (56, 156) nicht in den Schließmechanismus (4, 104) eingeführt ist, der Schließmechanismus (4, 104) das Anschlussfenster (33', 133') verschließt, das an dem Ende der Reihe der Anschlussfenster (33, 33', 133, 133') angeordnet ist; und
wenn das Batteriepack in den Lade-Hohlraum (51, 151) geladen ist und der Verschluss-Öffnungsstab (56, 156) in den Schließmechanismus (4, 104) eingeführt ist, der Schließmechanismus (4, 104) das Anschlussfenster (33', 133') öffnet, das an dem Ende der Reihe der Anschlussfenster (33, 33', 133, 133') angeordnet ist.

2. Batteriepack gemäß Anspruch 1, wobei der Schließmechanismus (4, 104) mit einem Verschluss (41), der mit einer hin- und hergehenden Bewegung in einer Richtung, welche die Anschluss-(3, 103)-Anschlussfenster (33', 133') verschließt, und in einer Richtung, welche die Anschlussfenster (33', 133') öffnet, öffnet und schließt, und mit einem federnden Material (42) ausgestattet ist, welches den Verschluss (41) in der fließenden Richtung federnd spannt, und
wobei wenn der Verschluss-Öffnungsstab (56, 156) nicht in den Schließmechanismus (4, 104) eingeführt ist, der Verschluss (41) durch das federnde Material (42) federnd gespannt geschlossen ist, um die Anschluss-(3, 103)-Anschlussfenster (33', 133') zu verschließen; und, wenn der Verschluss-Öffnungsstab (56, 156) in den Schließmechanismus (4, 104) eingeführt ist, der Verschluss (41) durch den Verschluss-Öffnungsstab (56, 156) in die Öffnungsrichtung gedrückt wird, um die Anschluss-(3, 103)-Anschlussfenster (33', 133') zu öffnen.

3. Batteriepack gemäß Anspruch 2, wobei der Verschluss (41) mit einem Aktuator (41B) ausgestattet ist, der den Verschluss (41) in der Öffnungsrichtung bewegt, wenn darauf durch den Verschluss-Öffnungsstab (56, 156) gedrückt wird, wobei der Aktuator (41B) mit einer Gleitebene (41b) versehen ist, die sich in Bezug auf die Einführungsrichtung des Verschluss-Öffnungsstabs (56, 156) neigt oder krümmt; und der Verschluss-Öffnungsstab (56, 156) drückt gegen die Gleitebene (41b), um den Verschluss (41) in die Öffnungsrichtung zu drücken, wenn der Verschluss-Öffnungsstab (56, 156) in den Schließmechanismus (4, 104) eingeführt wird.

4. Elektrische Vorrichtung (50, 150), welche mit einem Batteriepack gemäß einem der Ansprüche 1 bis 3 beladen wird, wobei die elektrische Vorrichtung umfasst:
das Batteriepack;
einen Lade-Hohlraum (51, 151), der zum Laden des Batteriepacks geeignet ist;
eine Vielzahl von Verbindungsanschlüssen (52, 152), die in dem Lade-Hohlraum (51, 151) zur Einführung in die Anschlussfenster (33, 33', 133, 133') angebracht sind; und
ein Verschluss-Öffnungsstab (56, 156), der zur Einführung in das Einführungsfenster (28, 128) in dem Lade-Hohlraum (51, 151) angebracht ist.

## Revendications

1. Bloc-batterie pour fournir une alimentation électrique à un appareil électrique (50, 150), le bloc-batterie comprenant :
une pluralité de batteries (11) qui peuvent être chargées ;
un boîtier (2, 102) qui héberge les batteries (11) ; et
un connecteur (3, 103) attaché au boîtier (2, 102) qui est apte à se connecter à des bornes de connexion (52, 152) de l'appareil électrique (50, 150) pour fournir une alimentation électrique à partir des batteries (11) hébergées dans le boîtier (2),
dans lequel le connecteur (3, 103) comporte une pluralité de fenêtres de bornes (33, 33', 133, 133') ouvertes dans une rangée dans un plan de connexion (3X, 103X) sur un côté d'insertion du boîtier (2, 102) pour connexion aux bornes de connexion (52, 152) lorsque le bloc-batterie est inséré dans une cavité de chargement (51, 151) de l'appareil électrique (50, 150), et les fenêtres de bornes (33, 33', 133, 133') sont exposées à travers le boîtier de bloc-batterie (2, 102),
le bloc-batterie comprend en outre un mécanisme obturateur (4, 104) qui ouvre et ferme uniquement une partie de la pluralité de fenêtres de bornes (33, 33', 133, 133') dans le connecteur (3, 103), dans lequel
le connecteur (3, 103) est pourvu d'une pluralité de contacts (32) qui se connectent à des bornes de connexion (52, 152) insérées dans les fenêtres de bornes (33, 33', 133, 133'), et le contact (32) dans la fenêtre de borne (33', 133') ouverte et fermée par le mécanisme obturateur (4, 104) est la borne de sortie positive ou négative (32A),
**caractérisé en ce que**
le boîtier (2, 102) comprend en outre une fenêtre d'insertion (28, 128) agencée pour guider une tige d'ouverture d'obturateur (56, 156) de l'appareil électrique (50, 150) montée dans la cavité de chargement (51, 151) dans le mécanisme obturateur (4, 104), dans lequel
lorsque le bloc-batterie n'est pas chargé dans la cavité de chargement (51, 151) et la tige d'ouverture d'obturateur (56, 156) n'est pas insérée dans le mécanisme obturateur (4, 104), le mécanisme obturateur (4, 104) ferme la fenêtre de borne (33', 133') positionnée à la fin de la rangée de fenêtres de bornes (33, 33', 133, 133') ; et
lorsque le bloc-batterie est chargé dans la cavité de chargement (51, 151) et la tige d'ouverture d'obturateur (56, 156) est insérée dans le mécanisme obturateur (4, 104), le mécanisme obturateur (4, 104) ouvre la fenêtre de borne (33', 133') positionnée à la fin de la rangée de fenêtres de bornes (33, 33', 133, 133').

2. Bloc-batterie selon la revendication 1, dans lequel le mécanisme obturateur (4, 104) est pourvu d'un obturateur (41) qui s'ouvre et se ferme avec un déplacement en va-et-vient dans une direction qui ferme les fenêtres de bornes (33', 133') du connecteur (3, 103) et dans une direction qui ouvre les fenêtres de bornes (33', 133'), et d'un matériau élastique (42) qui force par effet de ressort l'obturateur (41) dans la direction de fermeture, et
dans lequel, lorsque la tige d'ouverture d'obturateur (56, 156) n'est pas insérée dans le mécanisme obturateur (4, 104), l'obturateur (41) est fermé par effet de ressort du matériau élastique (42) pour fermer les fenêtres de bornes (33', 133') du connecteur (3, 103) ; et, lorsque la tige d'ouverture d'obturateur (56, 156) est insérée dans le mécanisme obturateur (4, 104), l'obturateur (41) est poussé dans la direction ouverte par la tige d'ouverture d'obturateur (56, 156) pour ouvrir les fenêtres de bornes (33', 133') du connecteur (3, 103).

3. Bloc-batterie selon la revendication 2, dans lequel l'obturateur (41) est pourvu d'un actionneur (41B) qui déplace l'obturateur (41) dans la direction ouverte lorsqu'il est pressé par la tige d'ouverture d'obturateur (56, 156), l'actionneur (41B) est pourvu d'un plan de coulissement (41b) qui s'incline ou s'incurve par rapport à la direction d'insertion de la tige d'ouverture d'obturateur (56, 156) ; et la tige d'ouverture d'obturateur (56, 156) presse contre le plan de coulissement (41b) pour faire coulisser l'obturateur (41) dans la direction d'ouverture lorsque la tige d'ouverture d'obturateur (56, 156) est insérée dans le mécanisme obturateur (4, 104).

4. Appareil électrique (50, 150) chargeant un bloc-batterie selon l'une quelconque des revendications 1 à 3, l'appareil électrique comprenant :
le bloc-batterie ;
une cavité de chargement (51, 151) apte à charger le bloc-batterie ;
une pluralité de bornes de connexion (52, 152) montées dans la cavité de chargement (51, 151) pour insertion dans les fenêtres de bornes (33, 33', 133, 133') ; et
une tige d'ouverture d'obturateur (56, 156) montée dans la cavité de chargement (51, 151) pour insertion dans la fenêtre d'insertion (28, 128).
